(19) Europäisches Patentamt / European Patent Office / Office européen des brevets

(11) **EP 4 613 792 A1**

(12) **EUROPEAN PATENT APPLICATION**
published in accordance with Art. 153(4) EPC

(43) Date of publication:
**10.09.2025 Bulletin 2025/37**

(21) Application number: 23899889.2

(22) Date of filing: **01.12.2023**

(51) International Patent Classification (IPC):
*C08G 63/20* (2006.01)  *C08G 63/78* (2006.01)
*C08G 63/60* (2006.01)  *C08G 63/90* (2006.01)
*C08L 67/02* (2006.01)  *C08L 67/00* (2006.01)
*C08L 3/02* (2006.01)  *C08L 1/02* (2006.01)
*C08L 67/04* (2006.01)  *C08K 3/013* (2018.01)

(52) Cooperative Patent Classification (CPC):
C08G 63/20; C08G 63/60; C08G 63/78;
C08G 63/90; C08K 3/013; C08L 1/02; C08L 3/02;
C08L 67/00; C08L 67/02; C08L 67/04; C08L 97/02;
Y02W 90/10

(86) International application number:
**PCT/CN2023/135830**

(87) International publication number:
**WO 2024/120311 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 CN 202211574161**

(71) Applicants:
• **KINGFA SCI. & TECH. CO., LTD.**
  **Guangzhou, Guangdong 510663 (CN)**
• **Zhuhai Kingfa Biomaterial Co., Ltd.**
  **Zhuhai, Guangdong 519050 (CN)**

(72) Inventors:
• **OUYANG, Chunping**
  **Guangzhou, Guangdong 510663 (CN)**
• **CHEN, Pingxu**
  **Guangzhou, Guangdong 510663 (CN)**

• **YE, Nanbiao**
  **Guangzhou, Guangdong 510663 (CN)**
• **ZENG, Xiangbin**
  **Guangzhou, Guangdong 510663 (CN)**
• **JIAO, Jian**
  **Guangzhou, Guangdong 510663 (CN)**
• **LU, Changli**
  **Guangzhou, Guangdong 510663 (CN)**
• **WANG, Chaojun**
  **Guangzhou, Guangdong 510663 (CN)**
• **ZHANG, Erjie**
  **Guangzhou, Guangdong 510663 (CN)**
• **GUO, Zhilong**
  **Guangzhou, Guangdong 510663 (CN)**
• **YAO, Yi**
  **Guangzhou, Guangdong 510663 (CN)**
• **ZHANG, Chuanhui**
  **Guangzhou, Guangdong 510663 (CN)**

(74) Representative: **Petraz, Gilberto Luigi et al**
  **GLP S.r.l.**
  **Viale Europa Unita, 171**
  **33100 Udine (IT)**

(54) **BIODEGRADABLE ALIPHATIC POLYESTER, AND PREPARATION METHOD THEREFOR AND USE THEREOF**

(57) Disclosed in the present invention are a biodegradable aliphatic polyester, a preparation method therefor and use thereof. The preparation method for the biodegradable aliphatic polyester of the present invention includes the following steps: dispersing a polyester product obtained by an esterification reaction and a polycondensation reaction in a tetrahydrofuran aqueous solution to carry out contact treatment, and carrying out post-treatment to obtain the biodegradable aliphatic polyester, wherein a duration of the contact treatment is 2 - 20 hours, and a temperature is 20-65°C. The biodegradable aliphatic polyester of the present invention has a whiteness index of ≥20 and an acid number of ≤1.45 mg KOH/g. Through the contact treatment process with the tetrahydrofuran aqueous solution, the low acid number is maintained while the color of the aliphatic polyester is improved, and meanwhile, the aliphatic polyester does not undergo performance degradation.

**Description**

## TECHNICAL FIELD

The present invention relates to the technical field of degradable materials, and more specifically relates to a biodegradable aliphatic polyester, a preparation method therefor and use thereof.

## BACKGROUND

Biodegradable aliphatic polyesters, such as polybutylene succinate (PBS) and polybutylene adipate, have excellent processing performance and can be processed on ordinary molding and processing equipment by methods such as extrusion, injection molding, blow molding, spinning, vacuum forming, lamination, and foaming. The products have a wide range of applications and have been mainly used in fields including the packaging field, such as beverage bottles and food packaging bags; the field of daily necessities, such as disposable tableware; and the agricultural field, such as biodegradable mulching films, etc.

Aliphatic diacids used for preparing the biodegradable aliphatic polyesters often contain impurities ranging from hundreds to thousands of ppm levels due to differences in raw material sources or production processes. For example, succinic acid usually contains trace amounts of formic acid, acetic acid, lactic acid, pyruvic acid, fumaric acid, sodium sulfate, etc. The existence of trace amounts of impurities not only affects the polymerization efficiency, but also affects the appearance of the polyester products, leading to a yellowish or reddish color and difficulty in achieving high whiteness. According to a report by Zhu Guixiang, et al. (Impact of Content of Impurity in Bio-based Succinic Acid on Performance of Biodegradable Copolyester [J]. Petrochemical Technology, 2012, 41(11): 1302-1306), a nitrogen-containing impurity and a trace amount of formic acid in the bio-based succinic acid leads to a yellowish color of the polyester.

To meet the demands of the polyester products at an application end, for example, to meet the demand of appearance or convenient coloring of straws, coffee capsules and other products, materials used are often required to have good whiteness. In the prior art, a phosphorus-containing passivator or a color stabilizer is usually added during a polymerization process to improve the color of the degradable polyester products.

WO2018219708A1 discloses a method for preparing an aliphatic-aromatic polyester. By adding 0.03 - 0.04 wt.% of a phosphorus compound during a polymerization process, the aliphatic-aromatic polyester with a whiteness index of at least 25 is obtained. However, the phosphorus compound, as a passivator of a titanium catalyst, weakens the activity of the titanium catalyst to a certain extent, leading to increase of an acid number of the obtained aliphatic-aromatic polyester and decrease of hydrolysis resistance of the aliphatic-aromatic polyester.

CN103649167A discloses a biodegradable aliphatic-aromatic copolyester with a stable color, a manufacturing method thereof and a product. By adding a color weakening compound, the whiteness of the aliphatic-aromatic copolyester is improved. However, the obtained polyester is still yellowish and cannot meet the demand of high whiteness in actual use.

Therefore, it is necessary to develop a biodegradable aliphatic polyester with improved whiteness.

## SUMMARY

To overcome the above defect of low whiteness value in the prior art, the present invention provides a method for preparing a biodegradable aliphatic polyester. Through a contact treatment process with a tetrahydrofuran aqueous solution, a low acid number is maintained while the color of the aliphatic polyester is improved, and meanwhile, the aliphatic polyester does not undergo performance degradation.

Another objective of the present invention is to provide a biodegradable aliphatic polyester, which is prepared by the above preparation method.

Another objective of the present invention is to provide use of the above biodegradable aliphatic polyester.

To solve the above technical problems, technical solutions adopted by the present invention are as follows.

A method for preparing a biological aliphatic polyester includes the following steps:

mixing a component A and a component B for sequentially carrying out an esterification reaction and a polycondensation reaction, dispersing an obtained polyester product in a tetrahydrofuran aqueous solution to carry out contact treatment, and carrying out post-treatment to obtain the biodegradable aliphatic polyester, wherein a duration of the contact treatment is 2 - 20 hours, and a temperature is 20°C - 65°C; a concentration of the tetrahydrofuran aqueous solution is 10 - 65 wt.%, and a mass ratio of the polyester product to the tetrahydrofuran aqueous solution is 1 : (1 - 10); the component A is an aliphatic dicarboxylic acid compound or a derivative thereof; and the component B includes an aliphatic dihydroxy compound with a same molar amount as the component A.

The inventor finds through studies that by carrying out the contact treatment after the polyester product is synthesized, a whiteness index of the biodegradable aliphatic polyester can be significantly increased. Colored substances in the polyester are generally some small-molecule substances or oligomers containing a chromogenic group. During the contact of the polyester product with the tetrahydrofuran aqueous solution, these substances that affect color are migrated from the polyester into the tetrahydrofuran aqueous solution, thereby achieving a technical effect of high whiteness.

The duration and temperature of the contact treatment need to be controlled within an appropriate range. When the temperature is too low or the duration is too short, the small-molecule substances or oligomers that affect the whiteness index cannot be effectively extracted, and the biodegradable aliphatic polyester prepared has a poor color effect. A boiling point of tetrahydrofuran is 66°C. When the temperature of the contact treatment is too high, the tetrahydrofuran is prone to boiling, and meanwhile, the tetrahydrofuran has a large volatilization amount, resulting in excessive loss.

Preferably, the duration of the contact treatment is 5 - 16 hours.

More preferably, the duration of the contact treatment is 10 - 12 hours.

Preferably, the temperature of the contact treatment is 35°C - 55°C.

Preferably, the concentration of the tetrahydrofuran aqueous solution is 25 - 45 wt.%, and the mass ratio of the polyester product to the tetrahydrofuran aqueous solution is 1 : (2 - 5).

Within the above range, the tetrahydrofuran has an appropriate effective content, which can ensure that a tetrahydrofuran residue amount in the final biodegradable aliphatic polyester product is low while impurities are effectively removed. When the mass ratio of the polyester product to the tetrahydrofuran aqueous solution is greater than 1, that is, when a solid-liquid ratio is large, the efficiency of the contact treatment is low. When the concentration of the tetrahydrofuran aqueous solution is too high, the tetrahydrofuran residue amount in the biodegradable aliphatic polyester is too high, requirements of food contact regulations cannot be met, and thus subsequent use of the product is affected.

In the present invention, a tetrahydrofuran residue amount in the biodegradable aliphatic polyester is ≤110 ppm.

In certain embodiments, the tetrahydrofuran residue amount in the biodegradable aliphatic polyester is ≤60 ppm.

Further, in certain embodiments, the tetrahydrofuran residue amount in the biodegradable aliphatic polyester is ≤30 ppm.

By controlling the above duration, temperature, tetrahydrofuran concentration and mass ratio, a viscosity number retention rate $\eta$ of the polyester product before and after the contact treatment is ≥96%;

$$\eta = VN_1/VN_0;$$

wherein $VN_0$ refers to a viscosity number of the polyester product before the contact treatment process;

$VN_1$ refers to a viscosity number of the biodegradable aliphatic polyester obtained after the contact treatment process; and

the viscosity number is detected in accordance with a method of GB/T 17931-1999.

The viscosity number retention rate $\eta \geq 96\%$ indicates that the contact treatment hardly causes performance degradation of the polyester.

The inventor finds through studies that although the variegated small-molecule substances can be extracted with other organic solvents (such as alcohols and acetone) to a certain extent, the viscosity number value of the polyester product is significantly decreased, and the viscosity number retention rate of the aliphatic polyester after the contact treatment with other organic solvents is lower.

Preferably, the preparation method includes the following steps:

mixing the component A and the component B with or without addition of a catalyst to form a paste, wherein

step i), allowing the paste to undergo an esterification or transesterification reaction with all or a part of the catalyst until a viscosity number of an esterification or transesterification product determined in a phenol/o-dichlorobenzene solution with a weight ratio of 1:1 under a constant-temperature water bath at 25±0.05°C according to GB/T 17931-1999 is 5 ml/g - 60 ml/g;

step ii), mixing the esterification or transesterification product obtained in the step i) with the remaining catalyst to carry out a pre-polycondensation reaction until a viscosity number of a prepolymer determined in a phenol/o-dichlorobenzene solution with a weight ratio of 1:1 under a constant-temperature water bath at 25±0.05°C according to GB/T 17931-1999 is 20 ml/g - 110 ml/g; and

step iii), allowing the prepolymer obtained in the ii) to undergo a polycondensation reaction until a viscosity number of a polycondensed polyester determined in a phenol/o-dichlorobenzene solution with a weight ratio of 1:1 under a constant-temperature water bath at 25±0.05°C according to GB/T 17931-1999 is 130 ml/g - 240 ml/g.

When necessary, after the step iii), a component C, a chain extender, can also be added to carry out a step iv): mixing the polycondensed polyester obtained in the step iii) with the chain extender to carry out an addition polymerization reaction until a viscosity number of a chain growth product determined in a phenol/o-dichlorobenzene solution with a weight ratio of 1:1 under a constant-temperature water bath at $25\pm0.05°C$ according to GB/T 17931-1999 is 150 ml/g - 260 ml/g.

The excess diol components are usually removed by distillation and returned to a loop after, for example, distillation purification.

Preferably, the catalyst is a titanium catalyst.

Optionally, the titanium catalyst is tetrabutyl titanate or tetraisopropyl titanate.

In the preparation method of the present invention, a use amount of the titanium catalyst is 0.001 - 1 wt%, preferably 0.03 - 0.2 wt%, of a mass of the polycondensed polyester in the step iii), wherein an addition amount of the catalyst in the step i) is 50-80% of a total use amount of the catalyst. Controlling the addition amount of the catalyst can make a subsequent processing process more stable.

In the step i), a temperature is set at 140-220°C, preferably 155-205°C, and a pressure is set at 0.6-1.2 bar, preferably 0.8-1.0 bar. The step i) can be carried out in a mixing device, for example, a vertical reactor with a stirrer. A typical retention time is 2 hours - 6 hours.

In the step ii), a liquid obtained in the step i) (esterification or transesterification) is added into a reactor suitable for the pre-condensation reaction, if appropriate, together with the remaining catalyst. In the step ii), a temperature is set at 220-270°C, preferably 230-250°C, and a pressure is set at 0.2-0.8 bar, preferably 0.35-0.55 bar. A typical retention time is 75 min - 180 min.

The step iii) can be carried out in a finishing machine, for example, a reactor such as a rotating disk reactor or a cage reactor. In the step iii), a temperature is set at 230-270°C, preferably 230-250°C, and a pressure is set at 0.2-5 mbar, preferably 0.5-3 mbar. A typical retention time is 60 min - 150 min, preferably 75 min - 120 min.

The step iv) can be carried out in an extruder, a continuous kneader or a static mixer. The polycondensed polyester obtained in the step iii) is added into a twin-screw extruder or added into the static mixer together with the chain extender (component C) with a use amount of 0 - 3 wt%, preferably 0.05 - 2 wt%, and particularly preferably 0.1 - 1.5 wt%, based on a weight of the biodegradable polyester composition at a reaction temperature of 180-235°C for a retention time of 3 min - 15 min to obtain the chain growth product. The static mixer may use an SMR, SMX or SMXL component, or a combination thereof. An example of a List reactor is a single-axis DISCOTHERM B or double-axis CRP or ORP reactor. The available extruder is a single-screw extruder or a twin-screw extruder.

Preferably, the post-treatment includes separation and drying.

Preferably, the drying is carried out in a blast drying tower at a temperature of 55-80°C for a time of 10 hours - 75 hours under dry air with a dew point of lower than -30°C.

More preferably, the temperature of the drying is 60-70°C, the time is 15 hours - 45 hours, and the dew point of the dry air is lower than -35°C.

Optionally, the aliphatic dicarboxylic acid compound or a derivative thereof is an aliphatic diacid containing 2 - 40 carbon atoms or a derivative thereof.

Preferably, the aliphatic dicarboxylic acid compound or a derivative thereof is an aliphatic diacid containing 4 - 14 carbon atoms or a derivative thereof.

Preferably, the aliphatic diacid is one or more of succinic acid, glutaric acid, adipic acid, azelaic acid, sebacic acid, or brassylic acid.

More preferably, the aliphatic dicarboxylic acid compound is the succinic acid and/or the adipic acid.

The derivative of the aliphatic dicarboxylic acid compound includes acid anhydride of dimethyl, diethyl, di-n-propyl, diisopropyl, di-n-butyl, diisobutyl, di-tert-butyl, di-n-pentyl, diisopentyl, di-n-hexyl ester, or dicarboxylic acid.

Preferably, the aliphatic dicarboxylic acid compound is composed of 60-100 mol% of the succinic acid or a derivative thereof and 0-40 mol% of the adipic acid or a derivative thereof.

More preferably, the aliphatic dicarboxylic acid compound is composed of 70-95 mol% of a derivative of the succinic acid or an ester thereof and 5-30 mol% of a derivative of the adipic acid or an ester thereof.

Preferably, the aliphatic dihydroxy compound is an aliphatic alkanediol containing 2 - 6 carbon atoms.

More preferably, the aliphatic dihydroxy compound is 1,3-propanediol and/or 1,4-butanediol.

Preferably, a molar ratio of the component B to the component A is (1 - 2) : 1. More preferably, the molar ratio of the component B to the component A is (1.05 - 1.7) : 1. Further preferably, the molar ratio of the component B to the component A is (1.15 - 1.6) : 1.

The biodegradable aliphatic polyester includes, based on a total weight of the biodegradable aliphatic polyester, 0-3 wt%, preferably 0.01-2 wt%, more preferably 0.05-1.2 wt%, and particularly preferably 0.08-0.2 wt% of a crosslinking agent with at least three functional groups.

Preferably, the compound with at least three functional groups is one or more of malic acid, citric acid, glycerol, pentaerythritol, or trihydroxymethylpropane.

More preferably, the compound with at least three functional groups is the malic acid and/or the glycerol.

When the content of the crosslinking agent with three functional groups is excessive, over-crosslinking of the polyester is likely to be caused, thereby affecting the plasticity of a material.

Preferably, the chain extender (component C), based on the total weight of the biodegradable aliphatic polyester, accounts for 0.01 - 4 wt%.

The component C includes one or more of the following components:

> c1, an isocyanate and/or isocyanurate with 2 or more than 2 functional groups,
> c2, a peroxide with 2 or more than 2 functional groups,
> c3, an epoxide with 2 or more than 2 functional groups, and
> c4, oxazoline, oxazine, caprolactam, and/or carbodiimide with 2 or more than 2 functional groups.

The component c1 used includes the isocyanate with 2 or more than 2 functional groups or a mixture of different isocyanates. An aromatic or aliphatic diisocyanate may be used, and an isocyanate with a higher degree of functionality may also be used.

For the present invention, the aromatic diisocyanate c1 is particularly toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate.

Particularly preferably, the diphenylmethane-2,2'-diisocyanate, the diphenylmethane-2,4'-diisocyanate or the diphenylmethane-4,4'-diisocyanate is used as the component c1; and other diisocyanates are usually used in the form of a mixture.

The isocyanate c1 that may also be used is tri(4-isocyanatophenyl)methane with three rings. The polynuclear aromatic diisocyanate can, for example, be formed during production of a diisocyanate with one or two rings.

For the present invention, the aliphatic diisocyanate c1 is particularly any linear or branched alkylene diisocyanate or cycloalkylene diisocyanate containing 2 to 20 carbon atoms, preferably 3 to 12 carbon atoms, for example, hexamethylene diisocyanate, isophorone diisocyanate, or methylene bis(4-isocyanatocyclohexane). Particularly preferably, the aliphatic diisocyanate c1 is the hexamethylene diisocyanate.

Preferably, the isocyanurate is an aliphatic isocyanurate, which is derived from alkylene diisocyanate or cycloalkylene diisocyanate containing 2 to 20 carbon atoms, preferably 3 to 12 carbon atoms, for example, isophorone diisocyanate or methylene bis(4-isocyanatocyclohexane). The alkylene diisocyanate may be a linear or branched compound. An isocyanurate of a cyclic trimer, a pentamer or a higher oligomer based on n-hexamethylene diisocyanate, such as hexamethylene diisocyanate, is particularly preferred.

A use amount of the component c1, based on the total weight of the biodegradable aliphatic polyester composition, is usually 0 - 3 wt.%, preferably 0.05 - 2 wt.%, and particularly preferably 0.1 - 1.5 wt.%.

Suitable examples of the peroxide with 2 or more than 2 functional groups (component c2) are selected from the following compounds: benzoyl peroxide, 1,1-di(tert-butylperoxy)-3,3,5-trimethylcyclohexane, 1,1-di(tert-butylperoxy) methylcyclododecane, n-butyl 4,4-di(butylperoxy)valerate, dicumyl peroxide, tert-butyl peroxybenzoate, dibutyl peroxide, $\alpha,\alpha$-di(tert-butylperoxy)diisopropylbenzene, 2,5-dimethyl-2,5-di(tert-butylperoxy)hexane, 2,5-dimethyl-2,5-di(tert-butylperoxy)hexan-3-acetylene, and tert-butylperoxy cumene.

A use amount of the component c2, based on the total weight of the biodegradable aliphatic polyester composition, is usually 0 -3 wt.%, preferably 0.1 - 2 wt.%, and particularly preferably 0.2 - 1 wt.%.

The epoxide with 2 or more than 2 functional groups (component c3) is, for example, hydroquinone, diglycidyl ether, resorcinol diglycidyl ether, 1,6-hexanediol diglycidyl ether, and hydrogenated bisphenol A diglycidyl ether. Other examples of the epoxide include diglycidyl terephthalate, diglycidyl tetrahydrophthalate, diglycidyl hexahydrophthalate, dimethyldiglycidyl phthalate, phenylene diglycidyl ether, ethylene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, and polybutylene glycol diglycidyl ether.

The particularly suitable component, epoxide with 2 or more than 2 functional groups, is a copolymer based on styrene, acrylate, and/or methacrylate and containing an epoxy group. A unit with the epoxy group is preferably glycidyl methacrylate or glycidyl acrylate.

A use amount of the component c3, based on the total weight of the biodegradable aliphatic polyester composition, is usually 0 - 3 wt.%, preferably 0.1 - 2 wt.%, and particularly preferably 0.2 - 1 wt.%. The component c3 can also be used as an acid scavenger.

The component c4 used is the oxazoline, oxazine, caprolactam, and/or carbodiimide with 2 or more than 2 functional groups.

Particularly preferably, a bridging portion of dioxazoline and dioxazine is a single bond, (CH$_2$)z-alkylene, wherein z=2, 3, or 4, for example, methylene, ethane-1,2-diyl, propane-1,3-diyl, propane-1,2-diyl, or phenylene. The particularly preferred dioxazoline that can be mentioned is 2,2'-bis(2-oxazoline), bis(2-oxazolinyl)methane, 1,2-bis(2-oxazolinyl) ethane, 1,3-bis(2-oxazolinyl)propane, or 1,4-bis(2-oxazolinyl)butane.

Preferably, the dioxazine is 2,2'-bis(2-dioxazine), bis(2-dioxazinyl)methane, 1,2-bis(2-dioxazinyl)ethane, 1,3-bis(2-dioxazinyl)propane, or 1,4-bis(2-dioxazinyl)butane, particularly 1,4-bis(2-dioxazinyl)benzene, 1,2-bis(2-dioxazinyl) benzene, or 1,3-bis(2-dioxazinyl)benzene.

The carbodiimide may be specifically N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

A use amount of the component c4, based on the total weight of the biodegradable aliphatic polyester composition, is usually 0 - 3 wt.%, preferably 0.1 - 2 wt.%, and particularly preferably 0.2 - 1 wt.%. The component c4 can also be used as an acid scavenger.

The present invention also protects a biodegradable aliphatic polyester with high whiteness, which is prepared by the above preparation method.

A whiteness index of the biodegradable aliphatic polyester is ≥20.

In certain embodiments, the whiteness index of the biodegradable aliphatic polyester is ≥26.

Further, in certain embodiments, the whiteness index of the biodegradable aliphatic polyester is ≥30.

The whiteness index is determined in accordance with a method of ASTM E313-73.

An acid number of the biodegradable aliphatic polyester is ≤1.45 mg KOH/g.

In certain embodiments, the acid number of the biodegradable aliphatic polyester is ≤1.2 mg KOH/g. Further, in certain embodiments, the acid number of the biodegradable aliphatic polyester is ≤1.0 mg KOH/g.

The acid number is determined with reference to DIN EN12634.

In the present invention, a melt mass-flow rate of the biodegradable aliphatic polyester determined at 190°C and 2.16 kg is ≤22 g/10 min.

In certain embodiments, the melt mass-flow rate of the biodegradable aliphatic polyester determined at 190°C and 2.16 kg is ≤15 g/10 min.

Further, in certain embodiments, the melt mass-flow rate of the biodegradable aliphatic polyester determined at 190°C and 2.16 kg is ≤6 g/10 min.

For the present invention, when a substance or a substance mixture shows, as defined in DIN EN 13432, a biodegradation percentage degree of at least 90%, the substance or the substance mixture has the characteristic of "biodegradability".

The present invention also protects a polyester mixture, which includes the following parts by weight of components:

> 35 - 70 parts of the biodegradable aliphatic polyester,
> 5 - 15 parts of an aliphatic-aromatic copolyester,
> 10 - 40 parts of one or more of starch, wood flour, cellulose, polyhydroxyalkanoate, polyglycolic acid, or polylactic acid, and
> 10 - 35 parts of an inorganic filler.

Preferably, the inorganic filler is one or more of talcum powder, calcium carbonate, barium sulfate, montmorillonite, or kaolin.

Preferably, the polyester mixture has a melt mass-flow rate of ≤8 g/10 min as determined at 190°C and 2.16 kg according to EN ISO 1133-2-2011, and a tetrahydrofuran content of ≤60 ppm. More preferably, the polyester mixture has the melt mass-flow rate of ≤5 g/10 min and the tetrahydrofuran content of ≤25 ppm.

The present invention also protects use of the polyester mixture in manufacturing of a degradable straw and a coffee capsule shell.

Compared with the prior art, the present invention has the following beneficial effects.

The biodegradable aliphatic polyester developed by the present invention has the high whiteness and the low acid number. Through the contact treatment process with the tetrahydrofuran aqueous solution, the low acid number is maintained while the color of the aliphatic polyester is improved, and meanwhile, the aliphatic polyester does not undergo performance degradation.

## DETAILED DESCRIPTION OF EMBODIMENTS

The present invention is further illustrated below in conjunction with specific embodiments.

Raw materials in examples are all commercially available.

Unless otherwise specified, reagents, methods and equipment used in the present invention are conventional reagents, methods and equipment in the technical field.

Biodegradable aliphatic polyester P1 was prepared by using the following preparation method:

step i): 800 kg of succinic acid, 880 kg of 1,4-butanediol, 2.02 kg of glycerol and 0.441 kg of tetrabutyl titanate were physically mixed at room temperature in an esterification reactor, and then, the mixture was allowed to undergo an esterification reaction at a temperature of 175-190°C and a pressure of 0.95-1.1 bar for 3-4 h to obtain an esterification product, wherein a viscosity number of the esterification product determined in a phenol/o-dichlorobenzene solution with a weight ratio of 1:1 under a constant-temperature water bath at $25\pm0.05$°C according to GB/T 17931-1999 was 27 ml/g;

step ii): the esterification product was introduced into a vertical stirring and full-mixing reactor after passed through a static mixer, 0.249 kg of tetrabutyl titanate was added into the reactor, a reaction was carried out at a temperature of 230-250°C and a pressure of 0.2-0.7 bar for 95-125 min, and most of the excessive 1,4-butanediol was removed by distillation to obtain a prepolyester, wherein a viscosity number of the prepolyester determined in a phenol/o-dichlorobenzene solution with a weight ratio of 1:1 under a constant-temperature water bath at $25\pm0.05$°C according to GB/T 17931-1999 was 65 ml/g; and

the prepolyester was added into a cage-shaped reactor, and a polycondensation reaction was carried out at a reaction temperature of 240-250°C and a reaction pressure of 0.20-0.35 mbar for a reaction duration of 120-150 min to produce polycondensed polyester P1 with a viscosity number of 192 ml/g determined in a phenol/o-cresol solution with a weight ratio of 1:1 under a constant-temperature water bath at $25\pm0.05$°C according to GB/T 17931-1999.

Biodegradable aliphatic polyester P2 was prepared by using the following preparation method:

step i): 800 kg of succinic acid, 310 kg of adipic acid, 980 kg of 1,4-butanediol, 2.71 kg of malic acid and 0.526 kg of tetrabutyl titanate were physically mixed at room temperature in an esterification reactor, and then, the mixture was allowed to undergo an esterification reaction at a temperature of 186-195°C and a pressure of 0.95-1.1 bar for 3-4 h to obtain an esterification product, wherein a viscosity number of the esterification product determined in a phenol/o-dichlorobenzene solution with a weight ratio of 1:1 under a constant-temperature water bath at $25\pm0.05$°C according to stipulations of GB/T 17931-1999 was 24 ml/g;

step ii): the esterification product was introduced into a vertical stirring and full-mixing reactor after passed through a static mixer, 0.283 kg of tetrabutyl titanate was added into the reactor, a reaction was carried out at a temperature of 235-245°C and a pressure of 0.36-0.48 bar for 85-135 min, and most of the excessive 1,4-butanediol was removed by distillation to obtain a prepolyester, wherein a viscosity number of the prepolyester determined in a phenol/o-dichlorobenzene solution with a weight ratio of 1:1 under a constant-temperature water bath at $25\pm0.05$°C according to GB/T 17931-1999 was 58 ml/g; and

the prepolyester was added into a cage-shaped reactor, and a polycondensation reaction was carried out at a reaction temperature of 242-248°C and a reaction pressure of 0.22-0.30 mbar for a reaction duration of 110-140 min to produce polycondensed polyester P2 with a viscosity number of 196 ml/g determined in a phenol/o-cresol solution with a weight ratio of 1:1 under a constant-temperature water bath at $25\pm0.05$°C according to GB/T 17931-1999.

Biodegradable aliphatic polyester P3 was prepared by using the following preparation method:

step i): 800 kg of succinic acid, 880 kg of 1,4-butanediol, 1.85 kg of glycerol, 0.85 kg of malic acid and 0.482 kg of tetrabutyl titanate were physically mixed at room temperature in an esterification reactor, and then, the mixture was allowed to undergo an esterification reaction at a temperature of 180-195°C and a pressure of 0.90-1.0 bar for 3.5-4.5 h to obtain an esterification product, wherein a viscosity number of the esterification product determined in a phenol/o-dichlorobenzene solution with a weight ratio of 1:1 under a constant-temperature water bath at $25\pm0.05$°C according to GB/T 17931-1999 was 29 ml/g;

step ii): the esterification product was introduced into a vertical stirring and full-mixing reactor after passed through a static mixer, 0.256 kg of tetrabutyl titanate was added into the reactor, a reaction was carried out at a temperature of 230-250°C and a pressure of 0.3-0.45 bar for 95-145 min, and most of the excessive 1,4-butanediol was removed by distillation to obtain a prepolyester, wherein a viscosity number of the prepolyester determined in a phenol/o-dichlorobenzene solution with a weight ratio of 1:1 under a constant-temperature water bath at $25\pm0.05$°C according to GB/T 17931-1999 was 71 ml/g; and

the prepolyester was added into a cage-shaped reactor, and a polycondensation reaction was carried out at a reaction temperature of 235-248°C and a reaction pressure of 0.23-0.38 mbar for a reaction duration of 125-160 min to produce polycondensed polyester P3 with a viscosity number of 199 ml/g determined in a phenol/o-cresol solution with a weight ratio of 1:1 under a constant-temperature water bath at 25±0.05°C according to GB/T 17931-1999.

Examples 1-12

The biodegradable aliphatic polyester P1 was dispersed in a tetrahydrofuran aqueous solution with a concentration of A according to a contact treatment process in Table 1, wherein a mass ratio of the polyester product to the tetrahydrofuran aqueous solution was B. Contact treatment was carried out, wherein a duration of the contact treatment was C, and a temperature was D. Then, separation and drying were carried out to obtain a biodegradable aliphatic polyester.

Example 13

The biodegradable aliphatic polyester P2 was dispersed in a tetrahydrofuran aqueous solution with a concentration of A according to a contact treatment process in Table 1, wherein a mass ratio of the polyester product to the tetrahydrofuran aqueous solution was B. Contact treatment was carried out, wherein a duration of the contact treatment was C, and a temperature was D. Then, separation and drying were carried out to obtain a biodegradable aliphatic polyester.

Example 14

The biodegradable aliphatic polyester P3 was dispersed in a tetrahydrofuran aqueous solution with a concentration of A according to a contact treatment process in Table 1, wherein a mass ratio of the polyester product to the tetrahydrofuran aqueous solution was B. Contact treatment was carried out, wherein a duration of the contact treatment was C, and a temperature was D. Then, separation and drying were carried out to obtain a biodegradable aliphatic polyester.

Table 1 Component contents (mol parts) and contact treatment conditions in Examples 1-14

|  |  | 1 | 2 | 3 | 4 | 5 | 6 |
|---|---|---|---|---|---|---|---|
| Component A | Succinic acid | 100 | 100 | 100 | 100 | 100 | 100 |
| Component B | 1,4-butanediol | 100 | 100 | 100 | 100 | 100 | 100 |
| Crosslinking agent with three functional groups | Glycerol | 0.17 | 0.17 | 0.17 | 0.17 | 0.17 | 0.17 |
| Contact treatment conditions | Concentration A (wt.%) | 45 | 45 | 45 | 45 | 45 | 45 |
|  | Mass ratio B | 1:5 | 1:5 | 1:5 | 1:5 | 1:5 | 1:5 |
|  | Duration C (h) | 16 | 5 | 4 | 2 | 20 | 12 |
|  | Temperature D (°C) | 35 | 55 | 40 | 65 | 20 | 45 |

|  |  | 7 | 8 | 9 | 10 | 11 | 12 |
|---|---|---|---|---|---|---|---|
| Component A | Succinic acid | 100 | 100 | 100 | 100 | 100 | 100 |
| Component B | 1,4-butanediol | 100 | 100 | 100 | 100 | 100 | 100 |
| Crosslinking agent with three functional groups | Glycerol | 0.17 | 0.17 | 0.17 | 0.17 | 0.17 | 0.17 |
| Contact treatment conditions | Concentration A (wt.%) | 25 | 60 | 35 | 65 | 10 | 40 |
|  | Mass ratio B | 1:5 | 1:1 | 1:8 | 1:3 | 1:10 | 1:2 |
|  | Duration C (h) | 12 | 12 | 12 | 12 | 12 | 12 |
|  | Temperature D (°C) | 45 | 45 | 45 | 45 | 45 | 45 |

| | . | 13 | 14 |
|---|---|---|---|
| Component A | Succinic acid | 76 | 100 |
| | Adipic acid | 24 | - |
| Component B | 1,4-butanediol | 100 | 100 |
| Crosslinking agent with three functional groups | Glycerol | - | 0.16 |
| | Malic acid | 0.17 | 0.07 |
| Contact treatment conditions | Concentration A (wt.%) | 45 | 45 |
| | Mass ratio B | 1:5 | 1:5 |
| | Duration C (h) | 12 | 12 |
| | Temperature D (°C) | 55 | 55 |

**Comparative Examples 1-10**

The biodegradable aliphatic polyester P1 was dispersed in a tetrahydrofuran aqueous solution with a concentration of A according to a contact treatment process in Table 2, wherein a mass ratio of the polyester product to the tetrahydrofuran aqueous solution was B. Contact treatment was carried out, wherein a duration of the contact treatment was C, and a temperature was D. Then, separation and drying were carried out to obtain a biodegradable aliphatic polyester.

Wherein,

in Comparative Example 1, the contact treatment was not carried out, and the separation and the drying were carried out directly to obtain the biodegradable aliphatic polyester;

the contact treatment in Comparative Example 2 is as follows: the polyester product was dispersed in an ethanol aqueous solution with a concentration of A, wherein the mass ratio of the polyester product to the ethanol aqueous solution was B; and the contact treatment was carried out, wherein the duration of the contact treatment was C, and the temperature was D;

the contact treatment in Comparative Example 3 is as follows: the polyester product was dispersed in an acetone aqueous solution with a concentration of A, wherein the mass ratio of the polyester product to the acetone aqueous solution was B; and the contact treatment was carried out, wherein the duration of the contact treatment was C, and the temperature was D; and

the contact treatment in Comparative Examples 4-10 is as follows: the polyester product was dispersed in a tetrahydrofuran aqueous solution with a concentration of A, wherein the mass ratio of the polyester product to the tetrahydrofuran aqueous solution was B; and the contact treatment was carried out, wherein the duration of the contact treatment was C, and the temperature was D.

Table 2 Component contents (mol parts) and contact treatment conditions in Comparative Examples 1-10

| | | 1 | 2 | 3 | 4 | 5 | 6 | 7 | 8 | 9 | 10 |
|---|---|---|---|---|---|---|---|---|---|---|---|
| Component A | Succinic acid | 100 | 100 | 100 | 100 | 100 | 100 | 100 | 100 | 100 | 100 |
| Component B | 1,4-butanedio l | 100 | 100 | 100 | 100 | 100 | 100 | 100 | 100 | 100 | 100 |
| Crosslinkin g agent with three functional groups | Glycerol | 0.1 7 | 0.1 7 | 0.1 7 | 0.1 7 | 0.1 7 | 0.1 7 | 0.1 7 | 0.1 7 | 0.17 | 0.1 7 |

(continued)

| | | 1 | 2 | 3 | 4 | 5 | 6 | 7 | 8 | 9 | 10 |
|---|---|---|---|---|---|---|---|---|---|---|---|
| Contact treatment conditions | Concentration A (wt.%) | - | 45 | 45 | 45 | 45 | 45 | 45 | 100 | 45 | 45 |
| | Mass ratio B | - | 1:5 | 1:5 | 1:5 | 1:5 | 1:5 | 1:5 | 1:5 | 1:0. 8 | 1:2 0 |
| | Duration C (h) | - | 12 | 12 | 1 | 25 | 12 | 12 | 12 | 12 | 12 |
| | Temperature D (°C) | - | 55 | 55 | 55 | 55 | 10 | 75 | 55 | 55 | 55 |

**Performance tests**

The biodegradable polyesters prepared in the examples and comparative examples above were used as test samples, and performance tests were carried out on the test samples, respectively. Specific methods are as follows.

(1) Tetrahydrofuran residue content (THF content):
About 1.2 g of the test samples were weighed at a headspace temperature of 105°C for a headspace time of 2 h. A gas chromatography test was carried out using Agilent 7697A-7890A equipment according to a gas chromatography heating program as follows: adopting an initial value of 50°C for a retention time of 3 min; and heating to 200°C at a heating rate of 12°C/min for a retention time of 4 min.
(2) Whiteness index:
According to ASTM E313-73, the whiteness index of the test samples was determined using a Minolta CM-5 spectrophotometer. Test sample particles with a particle size of 1.2-5.4 g/100 were selected and tested in parallel for three times to obtain a mean. The test samples to be analyzed were filled in a glass cuvette (from Minolta) (with a filling height of at least 3 cm). The test samples were pressed at a pressure from a measuring head of the Minolta instrument.
(3) Viscosity number retention rate:
(Except for Comparative Example 1) The viscosity number ($VN_0$) of the polyester product before the contact treatment and the viscosity number ($VN_1$) of the biodegradable polyester after the contact treatment were detected, and the viscosity number retention rate ($\eta$) was calculated, wherein $\eta=VN_1/VN_0$. The viscosity number was determined in a phenol/o-dichlorobenzene solution with a weight ratio of 1:1 under a constant-temperature water bath at $25\pm0.05$°C according to GB/T 17931-1999, wherein a sample concentration was 5 mg/ml.
(4) Acid number:
The acid number AN (mg KOH/g) of the test samples was determined with reference to DIN EN 12634 in October, 1998. A solvent mixture used included 1 part by volume of dimethyl sulfoxide, 8 parts by volume of isopropanol and 7 parts by volume of toluene, wherein the volume of the solvent mixture was 150 ml. According to stipulations of a DIN EN 12634-1998 standard, the samples were pre-titrated to determine an appropriate sample mass and ensure that a volume of a titration solution consumed was 2-3 ml. The samples were added into the solvent mixture and heated to 70-85°C to ensure that all of the samples were completely dissolved into clear solutions, and during the titration, the temperatures of the solutions were maintained at 65-75°C to avoid precipitation of the samples. Tetrabutylammonium hydroxide was selected as the titration solution while avoiding the use of highly toxic tetramethylammonium hydroxide. Meanwhile, to prevent the solvent mixture from absorbing $CO_2$ from the air and affecting the volume of the titration solution consumed by a blank solvent, when the volume of the titration solution consumed by the blank solvent was tested, the blank solvent was pre-treated in the same test operation process as the samples, for example, the blank solvent was subjected to heating treatment with the same time and temperature, and then the blank solvent was titrated.
(5) MFR:
According to a method of an ISO 1133-2-2011 standard, the melt mass-flow rate was detected at 190°C and 2.16 kg.

Test results of examples are shown in Table 3, and test results of comparative examples are shown in Table 4.

Table 3 Test results of examples

| | 1 | 2 | 3 | 4 | 5 | 6 | 7 |
|---|---|---|---|---|---|---|---|
| Acid number mg KOH/g | 0.96 | 1.10 | 1.20 | 1.30 | 1.45 | 0.78 | 1.06 |
| Viscosity number retention rate % | 98.79 | 97.93 | 97.61 | 97.32 | 96.28 | 99.86 | 98.22 |

(continued)

| | 1 | 2 | 3 | 4 | 5 | 6 | 7 |
|---|---|---|---|---|---|---|---|
| Whiteness index | 33 | 30 | 26 | 23 | 20 | 34 | 31 |
| Tetrahydrofuran content ppm | 30 | 22 | 60 | 84 | 110 | 24 | 17 |
| MFR | 4.0 | 4.2 | 4.5 | 4.7 | 4.8 | 3.9 | 4.2 |
| | 8 | 9 | 10 | 11 | 12 | 13 | 14 |
| Acid number mg KOH/g | 1.37 | 1.16 | 1.12 | 1.42 | 1.00 | 0.69 | 0.72 |
| Viscosity number retention rate % | 97.54 | 97.81 | 97.89 | 96.00 | 98.37 | 99.94 | 99.91 |
| Whiteness index | 24 | 28 | 29 | 21 | 32 | 35 | 35 |
| Tetrahydrofuran content ppm | 98 | 78 | 67 | 105 | 25 | 30 | 29 |
| MFR | 4.6 | 4.3 | 4.2 | 5.0 | 4.2 | 4.1 | 3.8 |

According to the test results in Table 3, the whiteness index of the biodegradable aliphatic polyesters prepared in various examples of the present invention is ≥20, and can reach 30 or above in some examples; the acid number is ≤1.45 mg KOH/g, and can reach 1.0 mg KOH/g or below in some examples; and the tetrahydrofuran content is ≤110 ppm, and can reach 30 ppm or below in some examples. After the biodegradable aliphatic polyesters are subjected to the contact treatment with the tetrahydrofuran aqueous solution, the viscosity number retention rate is ≥96%, indicating that the contact treatment carried out according to the preparation method of the present invention does not cause a negative impact on self-performance of the biodegradable aliphatic polyesters.

According to Examples 1-6, when the duration of the contact treatment is 5-16 h and the temperature is 35-55°C, the biodegradable aliphatic polyesters have the higher whiteness index and the lower tetrahydrofuran content. In Examples 6-12, when the concentration of the tetrahydrofuran aqueous solution is 25-45 wt.% and the mass ratio of the polyester product to the tetrahydrofuran aqueous solution is 1:(2-5), the biodegradable aliphatic polyesters have higher whiteness index and lower tetrahydrofuran content.

Table 4 Test results of comparative examples

| | 1 | 2 | 3 | 4 | 5 | 6 | 7 | 8 | 9 | 10 |
|---|---|---|---|---|---|---|---|---|---|---|
| Acid number mg KOH/g | 1.6 7 | 1.52 | 1.31 | 1.60 | 0.61 | 1.62 | 1.55 | 0.53 | 1.60 | 0.66 |
| Viscosity number retention rate % | - | 94.3 2 | 96.2 3 | 96.6 9 | 97.6 3 | 97.7 7 | 95.4 1 | 99.8 1 | 96.5 8 | 97.5 2 |
| Whiteness index | 15 | 23 | 13 | 16 | 33 | 18 | 19 | 33 | 16 | 31 |
| Tetrahydrofuran content ppm | 148 | 10 | 14 | 20 | 187 | 17 | 213 | 287 | 12 | 248 |
| MFR | 3.8 | 6.0 | 4.8 | 4.7 | 4.5 | 4.5 | 5.4 | 3.8 | 4.6 | 4.5 |

According to the test results in Table 4, when the contact treatment is not carried out and the separation and the drying are carried out directly in Comparative Example 1, the whiteness index of the biodegradable aliphatic polyester prepared by the preparation method is only 15, indicating that the whiteness is poor. When the tetrahydrofuran aqueous solution is replaced with the ethanol aqueous solution of the same concentration and weight in Comparative Example 2 and the tetrahydrofuran aqueous solution is replaced with the acetone aqueous solution of the same concentration and weight in Comparative Example 3, it is difficult to simultaneously balance the whiteness index and viscosity number retention rate of the biodegradable aliphatic polyester.

As can be seen from Comparative Examples 4-10, when the time or temperature of the contact treatment, the concentration of the tetrahydrofuran aqueous solution or the mass ratio of the polyester product to the tetrahydrofuran aqueous solution exceeds the range limited by the preparation method of the present invention, the biodegradable aliphatic polyester with high whiteness, low tetrahydrofuran content and low acid number cannot be prepared.

Obviously, the above examples of the present invention are only instances for clearly illustrating the present invention and are not limitations of the embodiments of the present invention. For those of ordinary skill in the art, other changes or alternations in different forms can also be made on the basis of the above description. It is not necessary and possible to list all of the embodiments herein. Any modifications, equivalent substitutions, improvements and the like made within the spirit and principles of the present invention shall be included in the scope of protection of the claims of the present invention.

**Claims**

1. A method for preparing a biodegradable aliphatic polyester, comprising the following steps:

   mixing a component A and a component B for sequentially carrying out an esterification reaction and a polycondensation reaction, dispersing an obtained polyester product in a tetrahydrofuran aqueous solution to carry out contact treatment, and carrying out post-treatment to obtain the biodegradable aliphatic polyester, wherein a duration of the contact treatment is 2 hours - 20 hours, and a temperature is 20°C - 65°C; a concentration of the tetrahydrofuran aqueous solution is 10 - 65 wt.%, and a mass ratio of the polyester product to the tetrahydrofuran aqueous solution is 1 : (1 - 10);
   the component A is an aliphatic dicarboxylic acid compound or a derivative thereof; and
   the component B comprises an aliphatic dihydroxy compound with a same molar amount as the component A.

2. The preparation method according to claim 1, wherein the duration of the contact treatment is 5 hours - 16 hours, and the temperature is 35°C - 55°C.

3. The preparation method according to claim 1, wherein the concentration of the tetrahydrofuran aqueous solution is 25 - 45 wt.%, and the mass ratio of the polyester product to the tetrahydrofuran aqueous solution is 1 : (2 - 5).

4. The preparation method according to claim 1, wherein a viscosity number retention rate $\eta$ of the polyester product before and after the contact treatment is $\geq 96\%$;

$$\eta = VN_1/VN_0;$$

   wherein $VN_0$ refers to a viscosity number of the polyester product before the contact treatment; and
   $VN_1$ refers to a viscosity number of the biodegradable aliphatic polyester obtained after the contact treatment.

5. The preparation method according to claim 1, wherein the aliphatic dicarboxylic acid compound is an aliphatic diacid containing 2 - 40 carbon atoms or a derivative thereof.

6. The preparation method according to claim 1, wherein the aliphatic dihydroxy compound is an aliphatic alkanediol containing 2 - 6 carbon atoms.

7. A biodegradable aliphatic polyester with high whiteness, prepared by the preparation method according to any one of claims 1-6.

8. The biodegradable aliphatic polyester with high whiteness according to claim 7, wherein the biodegradable aliphatic polyester has a whiteness index of $\geq 20$, an acid number of $\leq 1.45$ mg KOH/g, and a tetrahydrofuran residue content of $\leq 110$ ppm.

9. The biodegradable aliphatic polyester with high whiteness according to claim 8, wherein the biodegradable aliphatic polyester has the whiteness index of $\geq 26$, and preferably, the whiteness index is $\geq 30$.

10. The biodegradable aliphatic polyester with high whiteness according to claim 8, wherein the biodegradable aliphatic polyester has the tetrahydrofuran residue content of $\leq 60$ ppm.

11. The biodegradable aliphatic polyester with high whiteness according to claim 8, wherein the biodegradable aliphatic polyester has the acid number of $\leq 1.2$ mg KOH/g.

12. The biodegradable aliphatic polyester with high whiteness according to claim 8, wherein a melt mass-flow rate of the biodegradable aliphatic polyester determined at 190°C and 2.16 kg according to an EN ISO 1133-2-2011 standard is ≤22 g/10 min.

13. A polyester mixture, comprising the following parts by weight of components: 35-70 parts of the biodegradable aliphatic polyester according to any one of claims 7-12, 5-15 parts of an aliphatic-aromatic copolyester, 10-40 parts of one or more of starch, wood flour, cellulose, polyhydroxyalkanoate, polyglycolic acid, or polylactic acid, and 10-35 parts of an inorganic filler.

14. The polyester mixture according to claim 13, wherein the polyester mixture has a melt mass-flow rate of ≤8 g/10 min as determined at 190°C and 2.16 kg according to EN ISO 1133-2-2011, and a tetrahydrofuran content of ≤60 ppm.

15. Use of the polyester mixture according to any one of claims 13-14 in manufacturing of a degradable straw and a coffee capsule shell.

## INTERNATIONAL SEARCH REPORT

| International application No. |
|---|
| **PCT/CN2023/135830** |

| A. | CLASSIFICATION OF SUBJECT MATTER |
|---|---|

C08G63/20(2006.01)i; C08G63/78(2006.01)i; C08G63/60(2006.01)i; C08G63/90(2006.01)i; C08L67/02(2006.01)i; C08L67/00(2006.01)i; C08L3/02(2006.01)i; C08L1/02(2006.01)i; C08L67/04(2006.01)i; C08K3/013(2018.01)i

According to International Patent Classification (IPC) or to both national classification and IPC

| B. | FIELDS SEARCHED |
|---|---|

Minimum documentation searched (classification system followed by classification symbols)

C08G, C08L, C08K

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI, ISI: 可生物降解脂肪族聚酯, 共聚酯, 四氢呋喃, 接触, 洗涤, 白度指数, 颜色, 脂肪族二羧酸, 脂肪族二羟基化合物, 淀粉, 木粉, 纤维素, 聚羟基链烷酸酯, 聚羟基乙酸, 聚乳酸, biodegradable aliphatic polyester, copolyester, tetrahydrofuran, THF, contact, wash, whiteness index, color, aliphatic diacid, aliphatic dihydroxy compound, starch, wood, cellulose, polyhydroxyalkanoate, polyglycolic acid, polylactic acid

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115785413 A (KINGFA SCIENCE AND TECHNOLOGY CO., LTD. et al.) 14 March 2023 (2023-03-14)<br>claims 1-15 | 1-15 |
| X | CN 103124761 A (MITSUBISHI CHEMICAL CORP.) 29 May 2013 (2013-05-29)<br>embodiments 1 and 10 | 7-8, 10-12 |
| Y | CN 103124761 A (MITSUBISHI CHEMICAL CORP.) 29 May 2013 (2013-05-29)<br>embodiments 1 and 10 | 1-6, 9, 13-15 |
| Y | CN 1143090 A (SHELL INTERNATIONALE RESEARCH MAATSCHAPPIJ B.V.) 19 February 1997 (1997-02-19)<br>embodiment 2 | 1-6, 9, 13-15 |
| Y | CN 113717356 A (ZHUHAI WANTONG CHEMICAL CO., LTD. et al.) 30 November 2021 (2021-11-30)<br>paragraphs 0057-0063 | 13-15 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2024** | **04 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/135830** |

| C. | DOCUMENTS CONSIDERED TO BE RELEVANT | |
|---|---|---|
| Category* | Citation of document, with indication, where appropriate, of the relevant passages | Relevant to claim No. |
| A | CN 1760304 A (SHANGHAI LIRI TECHNOLOGIES CO., LTD.) 19 April 2006 (2006-04-19) embodiment 11 | 1-15 |
| A | JP 2018145221 A (MITSUBISHI CHEMICAL CORP.) 20 September 2018 (2018-09-20) paragraphs 0023-0041, 0071-0078, and 133-150 | 1-15 |

Form PCT/ISA/210 (second sheet) (July 2022)

**INTERNATIONAL SEARCH REPORT**
Information on patent family members

International application No.

**PCT/CN2023/135830**

| Patent document cited in search report | | | Publication date (day/month/year) | Patent family member(s) | | | Publication date (day/month/year) |
|---|---|---|---|---|---|---|---|
| CN | 115785413 | A | 14 March 2023 | None | | | |
| CN | 103124761 | A | 29 May 2013 | WO | 2012043488 | A1 | 05 April 2012 |
| | | | | US | 2013211037 | A1 | 15 August 2013 |
| | | | | US | 8680229 | B2 | 25 March 2014 |
| | | | | JP | 2012092310 | A | 17 May 2012 |
| | | | | JP | 5834696 | B2 | 24 December 2015 |
| | | | | EP | 2623540 | A1 | 07 August 2013 |
| | | | | EP | 2623540 | A4 | 18 May 2016 |
| | | | | EP | 2623540 | B1 | 28 March 2018 |
| CN | 1143090 | A | 19 February 1997 | EP | 0742251 | A1 | 13 November 1996 |
| | | | | EP | 0742251 | B1 | 29 January 2003 |
| | | | | SG | 48395 | A1 | 17 April 1998 |
| | | | | NO | 961827 | D0 | 06 May 1996 |
| | | | | NO | 961827 | L | 11 November 1996 |
| | | | | NO | 312103 | B1 | 18 March 2002 |
| | | | | AR | 001866 | A1 | 10 December 1997 |
| | | | | CA | 2175876 | A1 | 09 November 1996 |
| | | | | DK | 0742251 | T3 | 26 May 2003 |
| | | | | TW | 397851 | B | 11 July 2000 |
| | | | | JPH | 08325407 | A | 10 December 1996 |
| | | | | PT | 742251 | E | 30 April 2003 |
| | | | | BR | 9602163 | A | 13 January 1998 |
| | | | | PL | 314078 | A1 | 12 November 1996 |
| | | | | PL | 186674 | B1 | 27 February 2004 |
| | | | | DE | 69625951 | D1 | 06 March 2003 |
| | | | | DE | 69625951 | T2 | 03 July 2003 |
| | | | | AU | 5209296 | A | 21 November 1996 |
| | | | | AU | 704462 | B2 | 22 April 1999 |
| | | | | KR | 960041251 | A | 19 December 1996 |
| | | | | HU | 9601211 | D0 | 29 July 1996 |
| | | | | HU | 9601211 | A2 | 28 April 1997 |
| | | | | HU | 9601211 | A3 | 28 October 1997 |
| | | | | HU | 218012 | B | 28 May 2000 |
| | | | | ES | 2190463 | T3 | 01 August 2003 |
| | | | | ATE | 231895 | T1 | 15 February 2003 |
| | | | | US | 5554657 | A | 10 September 1996 |
| CN | 113717356 | A | 30 November 2021 | None | | | |
| CN | 1760304 | A | 19 April 2006 | None | | | |
| JP | 2018145221 | A | 20 September 2018 | None | | | |

Form PCT/ISA/210 (patent family annex) (July 2022)

**EP 4 613 792 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018219708 A1

- CN 103649167 A

**Non-patent literature cited in the description**

- **ZHU GUIXIANG et al.** Impact of Content of Impurity in Bio-based Succinic Acid on Performance of Biodegradable Copolyester [J. *Petrochemical Technology*, 2012, vol. 41 (11), 1302-1306